# EUROPÄISCHE PATENTSCHRIFT

(11) **EP 3 971 448 B1**
(45) Veröffentlichungstag und Bekanntmachung des Hinweises auf die Patenterteilung: **26.04.2023**
(21) Anmeldenummer: 20197576.0
(22) Anmeldetag: 22.09.2020
(51) Int. Cl.: F16H 25/22

(54) **KUGELGEWINDETRIEB UND SPINDELMUTTER HIERFÜR**
BALL SCREW AND SPINDLE NUT FOR SAME
MÉCANISME À VIS À BILLES ET ÉCROU DE VIS CORRESPONDANT

(43) Veröffentlichungstag der Anmeldung: 23.03.2022
(73) Patentinhaber: SFS Group International AG, 9435 Heerbrugg (CH)
(72) Erfinder: Nagypal, Andras, 9470 Buchs (CH); Frei, Stefan, 7000 Chur (CH); Fischlin, David, 9452 Hinterforst (CH); Zach, Marijo, 9443 Widnau (CH)

(56) Entgegenhaltungen:
- EP-A1- 3 499 089
- DE-A1-102004 025 683
- JP-A- 2001 141 019
- US-A- 4 074 587

## Beschreibung

Die vorliegende Erfindung betrifft einen Kugelgewindetrieb und insbesondere die Spindelmutter eines Kugelgewindetriebes.

### TECHNISCHES GEBIET

Als Kugelumlaufspindel oder auch Kugelgewindetrieb wird üblicherweise ein Wälzschraubtrieb mit Kugeln als Wälzkörpern bezeichnet. Zu den Hauptbestandteilen eines Kugelgewindetriebs zählen eine Gewindespindel mit Aussengewinde und eine diese Spindel umgreifende Spindelmutter mit Innengewinde. Die Gewindezüge der Gewindespindel wie auch der Spindelmutter sind als Kugelrillen mit einem geeigneten Profil ausgebildet und komplementär so aufeinander abgestimmt, dass sie im montierten Zustand gemeinsam einen tunnelförmigen Kugelkanal bzw. eine Kugelführung bilden. Anders als bei einer Schraube-Mutter-Verbindung, bei der die Gewindeflanken flächig aufeinander gleiten, übernehmen beim Kugelgewindetrieb die umlaufenden Kugeln im Gewinde die Lastübertragung zwischen Mutter und Spindel. Die flächige Gleitbewegung wird also durch eine Rollbewegung ersetzt, was mit verringerter Reibung einhergeht.

Um einen geschlossenen Umlaufpfad für die Kugeln zu erhalten, werden Kugelrückführungen eingesetzt. Diese haben die Aufgabe, die Kugeln an einer ersten Stelle aus dem Kugelkanal zwischen Spindelmutter und Gewindespindel herauszuheben und an einer zweiten Stelle wieder zuzuführen. Die Kugelrückführung stellt also einen Bypass dar, der eine oder mehrere Gewindezüge des Mutter-Spindel-Systems überbrückt und damit einen geschlossenen Umlaufpfad für die Kugeln eines Kugelgewindetriebs ermöglicht. Üblicherweise besteht eine Kugelrückführung aus einer ersten Kugelumlenkung (aus dem Kugelkanal), einem Überführungskanal und einer zweiten Kugelumlenkung (in den Kugelkanal). In der Regel werden die Kugeln aus dem Kugelkanal radial nach aussen ausgehoben und innerhalb oder ausserhalb der Spindelmutter im Überführungskanal (z.B. einer Rinne oder einem Rohr) geführt, bevor sie an der dafür vorgesehenen Stelle durch die zweite Kugelumlenkung wieder in den Kugelkanal zwischen Gewindespindel und Spindelmutter eingeführt werden.

Technisch gesehen arbeitet ein Kugelgewindetrieb als Schraubgetriebe, das eine Drehbewegung in eine Längsbewegung umsetzen kann, oder umgekehrt, wobei die Unter- bzw. Übersetzung durch die Dimensionierung der Gewindespindel und die Steigung des Gewindes bestimmt wird. Kugelgewindetriebe können im Grundsatz auf zwei Arten betrieben werden. Wird die Spindelmutter ortsfest, aber drehbar gelagert, die Gewindespindel jedoch drehfest, aber längsverschieblich, so bewegt sich die Gewindespindel entlang ihrer Längsachse, sobald die Mutter angetrieben wird. Im zweiten Fall wird die Gewindespindel ortsfest, aber drehbar gelagert und die Spindelmutter längsbeweglich drehfest gelagert. Dies führt bei angetriebener Gewindespindel zu einer Linearbewegung der Spindelmutter entlang der Gewindespindel.

Kugelgewindetriebe werden in vielen technischen Anwendungen eingesetzt, vor allem im Maschinenbau und dort bevorzugt in Werkzeugmaschinen. Zunehmend kommen Kugelgewindetriebe aber auch als Längsantriebe in Bereichen zum Einsatz, wo bisher Hydraulik- oder Pneumatiksysteme Verwendung fanden, z.B. in Pressen, Spritzgießmaschinen und Servolenkungen. Zudem spielen Kugelgewindetriebe auch eine zunehmende Rolle in elektromechanischen und elektro-hydraulischen Bremssystemen, wo Kugelgewindetriebe als Ersatz für hydraulische Bremszylinder oder parallel zu bekannten Bremssystemen bei Bremsassistenzsystemen eingesetzt werden. Dort helfen sie, von Elektromotoren angetrieben, die Bremskraft eines Fahrers zu verstärken bzw. als Teil eines Sicherheitssystems einen (Not-)Bremsvorgang einzuleiten oder zu unterstützen. Auch rein elektrisch betriebene Bremssysteme mit Kugelgewindetrieben als Bremszylinderersatz an jedem Rad werden damit möglich.

### HINTERGRUND

Im Betrieb wirken auf die Kugeln verschiedene Kräfte. So werden sie, je nach Antriebsrichtung und Last an verschiedene Flanken des Kugelkanals gepresst und stehen daher unter Druckspannung. Dies führt dazu, dass an den Stellen, wo die Kugeln aus dem Kugelkanal zwischen Spindel und Mutter ausgehoben werden, diese Druckspannung freigesetzt wird. Es gelingt praktisch nicht, diesen Entlastungsvorgang so kontinuierlich zu gestalten, dass die Kugel einfach in die Kugelrückführung rollt oder gleitet. Vielmehr wird durch die mehr oder weniger sprunghafte oder stufenweise Entlastung eine resultierende Kraft entstehen, die die Kugel in die Kugelumlenkung bzw. den Überführungskanal katapultiert. Dieses Verhalten kann zu übermässiger Abnutzung der Kugel bzw. der Kugelumlenkung führen bzw. erzeugt ein störendes Betriebsgeräusch und/oder unerwünschte Vibrationen. Dieses Verhalten wird unter dem Begriff NVH für noise, vibration, harshness zusammengefasst. Speziell im Automobilbau wird NVH als Problem betrachtet, weil es beim Nutzer den Eindruck mangelhafter Qualität oder eines (beginnenden) Defekts auslösen könnte, auch wenn noch kein technisches Problem vorliegt.

### STAND DER TECHNIK

Im Stand der Technik sind verschiedene Ansätze bekannt, um die Entlastung einer Kugel bei der Kugelumlenkung zu verbessern. Ein Ansatz besteht darin, eine Kugelumlenkung so zu gestalten, dass sie als exakt tangential an den Kugelkanal der umgreifenden Spindelmutter angepasster Kanal bzw. Rohr beginnt. Die dafür erforderliche Bohrung durch die Spindelmutter herzustellen ist allerdings technisch herausfordernd.

Ähnlich beschreibt die DE 10 2004 025 683, die Kugelrille in der Spindelmutter und den Kugeleinlauf mit demselben Querschnittprofil vorzusehen.

In der Schrift DE OS 36 35 212 wird vorgeschlagen, den Rückführkanal aussen im Anschluss an die Durchtritte aus der Spindelmutter so zu gestalten, dass dessen Mittellinie eine speziell dreidimensionale Raumkurve beschreibt.

Die DE 10 2011 076 438 schlägt vor, den Ein bzw. Austrittsbereich für die Kugeln aus dem Gewindegang aufzuweiten.

Die Patentschrift US 4,074,587 zeigt einen Kugelgewindetrieb mit einer Kugelentlastung, bei der der Entlastungskanal einerseits senkrecht auf einer Ebene durch die Zentralachse steht und andererseits um einen Abstand in Richtung der Zentralachse versetzt angeordnet ist.

Allen Varianten des Standes der Technik ist gemein, dass sie herstellungstechnisch komplex und/oder teuer sind. Es besteht daher ein Bedürfnis nach einer Spindelmutter mit einer Kugelumlenkung, die die Entlastung der Kugeln mit Blick auf NVH Kriterien verbessert und gleichzeitig eine rationelle Herstellung erlaubt.

Diese Aufgabe wird von einer Spindelmutter mit den Merkmalen des unabhängigen Anspruches gelöst. Vorteilhafte Ausführungsformen der Erfindung sind in den abhängigen Ansprüchen angegeben.

### BESCHREIBUNG DER ERFINDUNG

Eine Spindelmutter für einen Kugelgewindetrieb umfasst ein im Wesentlichen hohlzylindrisches Werkstück aus Metall mit einer äusseren Mantelfläche M_{A} und einer zentralsymmetrischen Mittenlängsachse Z. Anbauteile an der Spindelmutter wie Flansche, Halterungen, Antriebselemente seien hierbei unberücksichtigt. An der (Hohl-)Zylinderinnenfläche befindet sich eine gewindeähnlich angeordnete Kugelrille K, die zur Aufnahme von Kugeln des Durchmessers d ausgelegt ist, wobei durch die helixförmige Gewindegrundlinie der Kugelrille K eine innere Zylinderfläche G definiert wird. Da die Zylinderinnenfläche mit der Kugelrille eine dreidimensionale Oberflächenstruktur aufweist, wird diese Zylinderfläche G als Bezugsfläche für die nachfolgenden Überlegungen herangezogen.

Wie oben erwähnt, bildet die Kugelrille K in der Spindelmutter zusammen mit der komplementär ausgelegten Kugelrille der Spindelmutter (im montierten Zustand) den Kugelkanal.

Ferner weist die Spindelmutter je paarweise angebrachte, geradlinige, im Wesentlichen zylindrischen Entlastungsbohrungen B auf, welche als Ein- und Ausleitkanäle für die Kugeln aus und in den Kugelkanal durch die Spindelmutterwandung angelegt sind. Jede Entlastungsbohrung B wird charakterisiert durch eine Mantellinie L, die einen Schnittpunkt mit der Gewindegrundlinie der Kugelrille K besitzt und die (geometrisch bzw. technisch betrachtete) Fortsetzung des Laufwegs einer Kugel vom Kugelkanal bzw. der Kugelrille K in die Entlastungsbohrung B darstellt. Dazu ist anzumerken, dass die Mantellinie L einen zumindest anfänglich geraden Verlauf besitzt, so dass die Lage der Mantellinie L ab dem Schnittpunkt von L mit G geometrisch eindeutig festgelegt werden kann und die nachfolgende Charakterisierung eindeutig erfolgt.

Die Entlastungsbohrung wird mit allen hier beschriebenen Auslegungen direkt in die Spindelmutter gebohrt und/oder gefräst und wird daher direkt die Ein-/Ausleitungsfunktion erfüllen. Technisch äquivalent könnte die beschriebene Geometrie auch mit einem Form-Werkstück aus Kunststoff, Metall (Guss, 3D-Druck) oder einem ähnlich formstabilen Material realisiert werden, das in eine entsprechend dimensionierte Aussparung der Spindelmutterwandung eingesetzt werden. Die Vorteile der beschriebenen Geometrie würden dadurch nicht gemindert. Ferner ist es auch denkbar, dass die Entlastungsbohrung auf der Innenseite wie beschrieben in der Wandung realisiert wird, aber auf der Spindelmutter-Aussenseite übergeht in ein Formteil, welches z.B. auch integral mit dem Überführungskanal gefertigt werden kann. Auch hier können Kunststoff, Metall oder Kombinationen hiervon zum Einsatz kommen.

Die Entlastungsbohrungen sind dabei nicht als rein zylindrische Bohrungen zu verstehen, sondern können auch elliptische oder unrunde Querschnitte haben. Für die Festlegung von L und den Schnittpunkt mit K ist das ohne Belang.

Folgt man diesen geometrischen Vorgaben, lässt sich nun eine Tangente T definieren, die sich einerseits an der Zylinderfläche G anschmiegt und ferner parallel im Abstand a > 0 zur Mantellinie L verläuft, wobei sowohl T wie L senkrecht auf einem gemeinsamen Lot R zur Mittenlängsachse Z stehen. Dabei stehen T wie auch L senkrecht auf einer auf einer Ebene E. Die Ebene E ist komplanar mit der Mittenlängsachse Z der Spindelmutter, das Lot R liegt ebenfalls in dieser Ebene. Anders formuliert, R und Z definieren die Ebene E.

Der Abstand a der beiden Parallelen T und L beträgt zwischen einem Fünftel und einem Drittel des Kugeldurchmessers d. Der Kugeldurchmesser d wurde als Massstab bzw. Vergleich für die Bemessung der Erfindung gewählt, weil dadurch unabhängig von der Dimensionierung der Spindelmutter bzw. der Gewindehelix eine breite Anwendbarkeit beschrieben werden kann. Anders formuliert beträgt der Wert für a: 1/5 d < a < 1/3 d

Dieser Wert für a bedeutet also anschaulich, dass die Laufbahn der Kugel in die Entlastungsbohrung B nicht perfekt tangential - und damit ohne Knick - verläuft, sondern dass ein definierter Punkt, C, als Schnittpunkt zwischen K und L den Übergang markiert. Die Richtung der Entlastungsbohrung, genauer gesagt, der Winkel der Bohrung in der Spindelmutterwandung entspricht dabei dem einer Tangente T an der Zylinderfläche G, jedoch radial nach innen, zur Mittenlängsachse Z hin um den Abstand a versetzt (Mantellinie L).

Dabei gilt zu berücksichtigen, dass die Bedingung "Tangente (T) an der Zylinderfläche (G) parallel im Abstand a > 0 zur Mantellinie (L), wobei sowohl T wie L senkrecht auf einem gemeinsamen Lot R zur Mittenlängsachse Z stehen" nicht automatisch bedeutet, dass die Bohrung bzw. ihre Projektion auf Z auch auf der Mittenachse Z senkrecht steht. Vielmehr kann die Bedingung auch erfüllt werden von einer Bohrung B, die z.B. den Steigungswinkel der Gewindehelix aufnimmt. Erst durch die Zusatzbedingung "T und L stehen senkrecht auf einer Ebene E, die durch das Lot R und die Mittenlängsachse Z definiert wird" wird sichergestellt, dass die Bohrungen B, bzw. die Projektion deren Mittenachsen auf der Mittenlängsachse Z senkrecht stehen.

Man könnte die Erfindung also auch so beschreiben, dass bewusst eine Stufe bzw. Kante definierter Geometrie vorgesehen wird, an der die Entlastung der Kugel beim Übergang in die Entlastungsbohrung wirksam endet. Diese ist aber so geformt bzw. der Übergang ist so gewählt, dass die NVH Bedingungen gegenüber vorbekannten Designs verbessert werden.

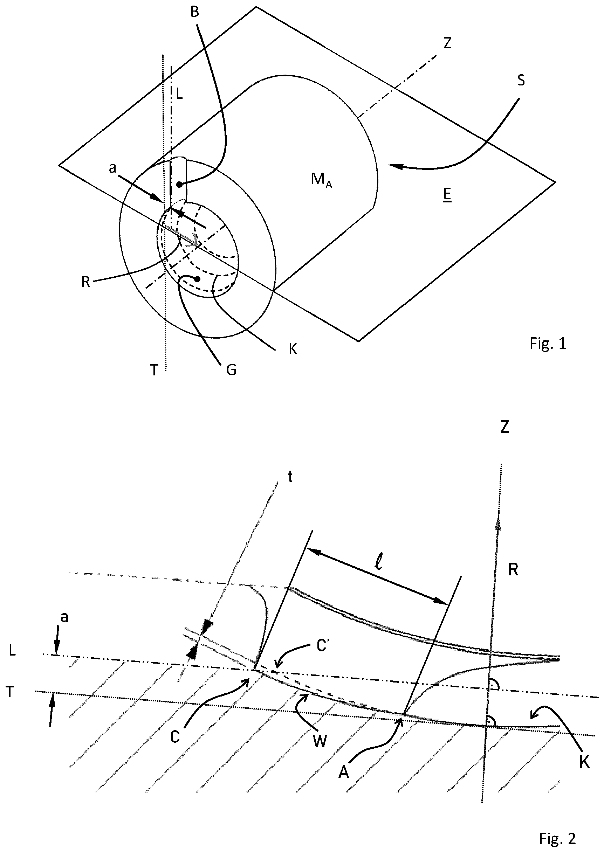

Dazu wird der Laufweg der Kugel im Kugelkanal bzw. der Kugelrille (K) auf einer Lauflänge ℓ vor dem Schnittpunkt C von K mit L abgesenkt, so dass beim Durchlaufen von ℓ der radiale Abstand der Kugel von der Mittenachse Z zunimmt. Für diesen Wegabschnitt W mit Lauflänge ℓ gilt: 2/5 d < ℓ < 2/3 d. Mit anderen Worten, die Kugelrille K wird auf einer kurzen Wegstrecke W vor der oben beschriebenen Stufe / Kante C so abgeflacht bzw. aufgeweitet oder vertieft, dass die Kugel sich von der Mittenlängsachse Z entfernt. Die Formulierung "abgeflacht bzw. aufgeweitet oder vertieft" wurde gewählt um den unterschiedlichen Designs von Kugelrillen Rechnung zu tragen. So kann der häufig verwendete "gotische Bogen" als Kugelrillen-Querschnitt durch Aufweiten so modifiziert werden, dass eine umlaufende Kugel ihre Lage relativ zur Mittenlängsachse der Spindelmutter vergrössert. Es kommt gemäss Erfindung auf den Effekt der Abstandsveränderung an und weniger auf die (technisch sinnvolle und mögliche) Methode, mit der dies bewirkt wird. In der Figur 2 ist dies als Absenkung des Laufweges gezeigt, ohne dass dies einschränkend gemeint ist.

Bevorzugt nimmt beim Durchlaufen von W der radiale Abstand t der Kugel von der Mittenachse um 1/33 bis 1/25 des Kugeldurchmessers d zu. Fertigungstechnisch lässt sich diese Modifikation der Kugelrille durch eine Fräsoperation oder durch elektrochemisches Abtragen erzielen. Mit letztere lassen sich zudem mehrere Laufwegabsenkungen an einer Spindelmutter mit mehreren Entlastungsbohrungen B gleichzeitig erzielen.

Der Übergangsbereich W mit Lauflänge ℓ von der Kugelrille (K) bis zum Punkt C zählt, technisch betrachtet, zur Helix des Innengewindes der Spindelmutter und nicht zur Entlastungsbohrung B. Darin liegt einer der erfinderischen Vorteile, weil damit die Gewindespindel als Gegenstück zur Spindelmutter auch im Übergangsabschnitt W unverändert zur Verfügung steht und nur durch einen geringen, zusätzlichen Bearbeitungsschritt der Spindelmutter die Entlastung der Kugeln im Abschnitt W erreicht wird.

Bei all diesen Angaben ist der Schnittpunkt C immer als der resultierende Schnittpunkt von K und L gemeint; im Zustand der fertig bearbeiteten Spindelmutter. Der Punkt C wird sich - bei ansonsten gleicher Spindelmutter - an einer anderen Stelle befinden, je nachdem, ob und auf welcher Länge die Absenkung des Laufwegs der Kugel in der Kugelrille K realisiert wird oder nicht. Für den Fachmann stellt dies bei der Auslegung jedoch kein Problem dar, er wird üblicherweise den Punkt C wählen, die Distanz t bestimmen und die Absenkung des Laufwegs ℓ ab da konstruieren.

Wie eingangs erwähnt, werden immer zwei Entlastungsbohrungen B als Ein- und Ausleitkanal mit einem dazwischen angeordneten Überführungskanal eine Kugelrückführung bilden. Wenn in der Beschreibung oder den Zeichnungen die Einzahl verwendet, beschrieben oder gezeigt wird, ist dies exemplarisch zu verstehen und nicht als Mangel.

Fertigungstechnisch hat es sich als vorteilhaft herausgestellt, die zwei Entlastungsbohrungen B parallel zueinander ausgerichtet herzustellen. Das bedeutet, dass für die Kugeln unabhängig von der Drehrichtung des Kugelgewindetriebs immer dieselben Bedingungen beim Entlasten bzw. ein Einführen in den Kugelkanal herrschen. Zudem lassen sich so die Bohr- bzw. Fräsoperation in einem Aufspann bewerkstelligen.

Die von der vorliegenden Erfindung vorgeschlagenen konstruktiven Auslegungen und Massnahmen erlauben den Verzicht auf komplex zu fräsende Übergänge oder Kurvenverläufe. Die Definition eines kalkulierten Überganges (Knick, Stufe) von der Kugelrille in die Entlastungsbohrung ist mit Blick auf die Fertigungstoleranz und auf die NVH Problematik besser zu kontrollieren als eine perfekt tangentiale Ausleitung oder komplexe Übergänge und Radien.

Im Sinne dieser Erfindung umfasst ein Kugelgewindetrieb in Grundkonfiguration eine Gewindespindel und eine Spindelmutter wie bis hier beschrieben und in den Figuren exemplarisch gezeigt. Die Gewindespindel wird von der Spindelmutter koaxial zumindest teilweise umschlossen (die Gewindespindel wird üblicherweise eine grössere Länge aufweisen als die Spindelmutter). Eine Vielzahl von Kugeln laufen im Zwischenraum zwischen Gewindespindel und Spindelmutter auf einer helixförmigen Kugelbahn. Eine Kugelumlenkung mit in oder auf der Mantelfläche der Spindelmutter angeordnetem Überführungskanal bewirkt einen geschlossenen Kugelumlauf. Ein Kugelgewindetrieb kann eine oder mehrere Kugelumlenkungen aufweisen mit unabhängigen Kugelumläufen.

In einer exemplarischen Ausführung wurde ein Spindelmutter realisiert, deren Kugelrille für Kugeln mit d = 2.4mm ausgelegt wurde. Der Radius der Kugelrille betrug ca. 7.5mm. Es wurde eine Absenkung um t=0.08mm realisiert auf einer Lauflänge ℓ von 1.2mm. Der Abstand a betrug ca. 0.56mm.

### KURZBESCHREIBUNG DER FIGUREN

Figur 1 zeigt einen funktionellen Querschnitt durch eine Spindelmutter mit Details zur Geometrie
Figur 2 zeigt im Detail den Entlastungsabschnitt des Kugelkanals
Figur 3 zeigt eine Draufsicht auf eine Spindelmutter mit 2 Paaren von Entlastungsbohrungen und jeweils dazwischen liegendem Verbindungskanal.

### BESCHREIBUNG DER FIGUREN

Figur 1 zeigt einen Querschnitt durch eine schematische Spindelmutter S als einfachen Hohlzylinder mit Aussenfläche MA. Die Mittenlängsachse Z liegt vollständig in einer Ebene E, die folgerichtig die Spindelmutter S der Längsachse Z nach hälftig schneidet. Auf Innenfläche des Hohlzylinders ist die Helix der Kugelrille K markiert. Die Grundlinie dieses Gewindes definiert die (zylindrische) Fläche G. Die Wandung der Spindelmutter S wird durch eine Entlastungsbohrung B durchbrochen. Die die Entlastungsbohrung B charakterisierende Mantellinie L (Punkt-Punkt-Strich-Linie) wird durch den Schnittpunkt mit K festgelegt. Technisch wird die Bohrung also so ausgelegt, dass sie - vereinfacht gesagt - die Kugelrille K (gestrichelt) in B entlang L fortführt. Das hier gezeigte Beispiel lässt erkennen, dass die Mantellinie L auf der Ebene E senkrecht steht. Die Tangente T (gepunktet) liegt an G an und ist parallel im Abstand a geführt. Auch T steht senkrecht auf E. Angedeutet ist ebenfalls die Lage des Lotes R von T auf Z, auf der L ebenfalls senkrecht steht.

Nicht gezeigt ist die Variante, in der T und Lauf R senkrecht stehen, aber nicht auf E. Das bedeutet, dass die Entlastungsbohrung eine gewisse Verkippung bzw. Abweichung von dem rechten Winkel auf der Ebene aufweisen wird. Die Beziehung "T und L stehen senkrecht auf R" bleibt auf jeden Fall erhalten. Der Abstand A als die Distanz zwischen T und L ist ebenfalls markiert.

Figur 2 zeigt einen vergrösserten Ausschnitt der Kugelausleitung aus der Kugelrille K mit der als erfinderische Ausführungsform realisierten Absenkung des Laufweges W der Länge ℓ. Betrachtet man den Laufweg einer Kugel (im Bild) von rechts kommend, so wird sie in den Kugelrille K belastet geführt, bis sie ab dem mit A bezeichneten Punkt in den abgesenkten Laufweg W übergeht. Am Ende der Strecke W, bei C, geht die Kugel in die Entlastungsbohrung B über und folgt dem Laufweg L, der wie W ebenfalls in der Wandung der Spindelmutter S ausgeführt ist. In der Figur 2 wurde zur Erläuterung auch der Punkt C' eingefügt, der den (virtuellen) Schnittpunkt von L mit der nicht abgesenkten Kugelrille K markiert, also ohne einen Abschnitt W.

Wie aus den vorhergehenden Ausführungen hervorgeht, ist der abgesenkte Wegabschnitt W relativ kurz. Es hat sich - unter dem Blickwinkel von NVH und Fertigungskosten daher als relativ unkritisch herausgestellt, was die Kurvatur von W angeht. W kann als einfache Gerade, als Kurve mit konstantem oder variablem Radius ausgeführt werden. Je nach Auslegung kann wird dies dazu führen, dass der Lauf der Kugel von K über W nach L mindestens einen Knick bzw. Stufe aufweist (mindestens bei C), je nach Gestaltung des Überganges von K nach W auch bei A.

Die Tangente T (punktiert) im Abstand a zu L (Punkt-Punkt-Strich) sowie das Lot R auf die Mittenlängsachse Z sind entsprechend vermerkt.

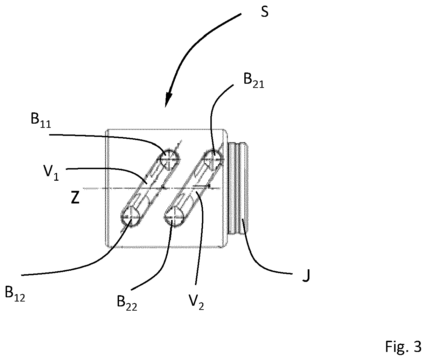

Figur 3 zeigt eine Draufsicht auf eine Spindelmutter S mit zwei Kugelumlenkungen der hier beschriebenen Art. In den Aussenmantel der Spindelmutter S sind zwei Paare von Entlastungsbohrungen B₁₁ und B₁₂ sowie B₂₁ und B₂₂ eingebracht, die als Aus- und Einleitkanäle dienen. B₁₁ und B₁₂ sind durch einen Überleitkanal V₁ verbunden, B₂₁ und B₂₂ durch V₂. In Figur 3 sind die Überleitkanäle V als Fräsnuten im Mantel der Spindelmutter ausgeführt. Diese Figur macht deutlich, dass die Entlastungsbohrungen B alle parallel verlaufen.

## Patentansprüche

1. Spindelmutter (S) für einen Kugelgewindetrieb, umfassend ein im Wesentlichen hohlzylindrisches Werkstück aus Metall mit einer äusseren Mantelfläche (M_{A}) und einer zentralsymmetrischen Mittenlängsachse (Z);
mit einer an der Zylinderinnenfläche gewindeähnlich angeordneten Kugelrille (K), die zur Aufnahme von Kugeln des Durchmessers d ausgelegt ist, wobei durch die helixförmige Gewindegrundlinie der Kugelrille (K) eine innere Zylinderfläche (G) definiert wird;
mit ferner je paarweise angebrachten, geradlinigen, im Wesentlichen zylindrischen Entlastungsbohrungen (B), welche als Ein- und Ausleitkanäle für die Kugeln aus und in den Kugelkanal durch die Spindelmutterwandung angelegt sind, wobei jede Entlastungsbohrung (B) charakterisiert ist durch
- eine Mantellinie (L), die einen Schnittpunkt (C) mit der Gewindegrundlinie des Kugelkanals besitzt und die Fortsetzung des Laufwegs einer Kugel vom Kugelkanal in die Entlastungsbohrung (B) darstellt; und
- eine Tangente (T) an der Zylinderfläche (G) die parallel im Abstand a zur Mantellinie (L) verläuft, wobei sowohl die Tangente (T) wie auch die Mittellinie (L) senkrecht auf einem gemeinsamen Lot (R) zur Mittenlängsachse (Z) stehen; wobei für den Abstand a gilt 1/5 d < a < 1/3 d; und zugleich
- sowohl die Tangente (T) wie auch die Mantellinie (L) senkrecht auf einer Ebene (E) stehen, die durch die Mittenlängsachse (Z) der Spindelmutter und das Lot (R) definiert wird;
**dadurch gekennzeichnet, dass** der Laufweg (W) der Kugel in der Kugelrille (K) auf einer Lauflänge ℓ vor dem Schnittpunkt (C) der Kugelrille (K) mit der Mantellinie (L) so abgesenkt wird, dass der radiale Abstand der Kugel beim Durchlaufen von ℓ von der Mittenachse (Z) um t zunimmt, wobei für ℓ gilt 2/5 d < ℓ < 2/3 d.

2. Spindelmutter (S) nach Anspruch 1, **dadurch gekennzeichnet, dass** der radiale Abstand t der Kugel von der Mittenlängsachse (Z) um 1/33 bis 1/25 des Kugeldurchmessers d zunimmt.

3. Spindelmutter (S) nach Anspruch 1-2, **dadurch gekennzeichnet, dass** die Mittenachsen zweier Entlastungsbohrungen (B), die zusammen als Ein- und Ausleitkanal Bestandteile einer Kugelrückführung bilden, parallel zueinander ausgerichtet sind.

4. Kugelgewindetrieb, umfassend eine Gewindespindel und eine Spindelmutter, die die Gewindespindel koaxial zumindest teilweise umschliesst und eine Vielzahl von Kugeln, die im Zwischenraum zwischen Gewindespindel und Spindelmutter auf einer helixförmigen Kugelbahn umlaufen können sowie einer in der Mantelfläche der Spindelmutter angeordneten Kugelumlenkung, **dadurch gekennzeichnet, dass** die Spindelmutter gemäss Anspruch 1 - 3 ausgeführt ist.

## Claims

1. Spindle nut (S) for a ball screw, comprising a substantially hollow cylindrical workpiece of metal having an outer circumferential surface (M_{A}) and a centrally symmetrical central longitudinal axis (Z);
having a ball groove (K) which is arranged in a thread-like manner on the inner cylindrical surface and is designed to receive balls of diameter d, wherein an inner cylindrical surface (G) is defined by the helical thread base line of the ball groove (K);
further having rectilinear, substantially cylindrical relief bores (B), each provided in pairs, which are designed as inlet and outlet channels for the balls from and into the ball channel through the spindle nut wall, wherein each relief bore (B) is **characterized by**
- a generatrix (L) having a point of intersection (C) with the thread base line of the ball channel and representing the continuation of the path of a ball from the ball channel into the relief bore (B); and
- a tangent (T) to the cylinder surface (G) which is parallel at a distance a to the generatrix (L), wherein both the tangent (T) and the generatrix (L) are perpendicular to a common perpendicular (R) to the central longitudinal axis (Z); wherein 1/5 d<a< 1/3 d applies for the distance a; and at the same time
- both the tangent (T) and the generatrix (L) are perpendicular to a plane (E) defined by the central longitudinal axis (Z) of the spindle nut and the perpendicular (R);
**characterized in that** the running path (W) of the ball in the ball groove (K) is lowered on a running length ℓ before the point of intersection (C) of the ball groove (K) with the generatrix (L) such that the radial distance of the ball increases by **t** when passing ℓ from the center axis (Z), wherein 2/5 d<f<2/3 d applies to ℓ.

2. Spindle nut (S) according to claim 1, **characterized in that** the radial distance t of the ball from the central longitudinal axis (Z) increases by 1/33 to 1/25 of the ball diameter d.

3. Spindle nut (S) according to claim 1-2, **characterized in that** the center axes of two relief bores (B), which together as inlet and outlet channel form components of a ball return, are aligned parallel to each other.

4. Ball screw, comprising a threaded spindle and a spindle nut, which at least partially surrounds the threaded spindle coaxially, and a plurality of balls, which can circulate in the intermediate space between the threaded spindle and the spindle nut on a helical ball path, as well as a ball deflection arranged in the circumferential surface of the spindle nut, **characterized in that** the spindle nut is designed according to claim 1-3.

## Revendications

1. Écrou de broche (S) pour une vis d'entraînement à billes, comprenant une pièce en métal sensiblement en forme de cylindre creux avec une surface d'enveloppe extérieure (M_{A}) et un axe longitudinal médian (Z) à symétrie centrale ;
avec une rainure à billes (K) disposée à la manière d'un filetage sur la surface intérieure du cylindre et conçue pour recevoir des billes de diamètre d, la ligne de fond de filet hélicoïdale de la rainure à billes (K) définissant une surface de cylindre intérieure (G) ;
avec en outre des perçages de décharge (B) cylindriques, rectilignes et disposés par paires, qui sont formés à travers la paroi de l'écrou de broche pour servir de conduits d'entrée et de sortie des billes dans et hors du conduit à billes, chaque perçage de décharge (B) étant **caractérisé par**
- une ligne d'enveloppe (L) qui possède un point d'intersection (C) avec la ligne de fond de filet du conduit à billes et qui représente le prolongement de la trajectoire de roulement d'une bille entre le conduit à billes et le perçage de décharge (B) et
- une tangente (T) à la surface de cylindre (G) qui est parallèle et à une distance a de la ligne d'enveloppe (L), la tangente (T) et la ligne médiane (L) étant l'une et l'autres perpendiculaires à une perpendiculaire (R) à l'axe longitudinal médian (Z) commune, la distance a étant de 1/5 d < a < 1/3 d et, dans le même temps,
- la tangente (T) et la ligne d'enveloppe (L) étant toutes deux perpendiculaires à un plan (E) défini par l'axe longitudinal médian (Z) de l'écrou de broche et la perpendiculaire (R),
**caractérisé en ce que** la trajectoire de roulement (W) des billes dans la rainure à billes (K) descend sur une longueur de roulement ℓ avant le point d'intersection (C) de la rainure à billes (K) avec la ligne d'enveloppe (L) de telle façon que la distance radiale des billes lorsqu'elles parcourent ℓ par rapport à l'axe médian (Z) augmente de t, ℓ étant de 2/5 d < ℓ < 2/3 d.

2. Écrou de broche (S) selon la revendication 1, **caractérisé en ce que** la distance radiale t des billes par rapport à l'axe longitudinal médian (Z) augmente de 1/33 à 1/25 fois leur diamètre d.

3. Écrou de broche (S) selon la revendication 1-2, **caractérisé en ce que** les axes médians de deux perçages de décharge (B) formant ensemble des parties d'un retour des billes en tant que canal d'entrée et canal de sortie sont orientés parallèlement l'un à l'autre.

4. Vis d'entraînement à billes, comprenant une broche filetée et un écrou de broche qui entoure au moins en partie la tige filetée de façon coaxiale et plusieurs billes qui peuvent circuler dans l'espace compris entre la tige filetée et l'écrou de broche sur une trajectoire de billes hélicoïdale ainsi qu'un renvoi de billes disposé dans la surface d'enveloppe de l'écrou de broche, **caractérisée en ce que** l'écrou de broche est réalisé selon les revendications 1 à 3.
